# EUROPÄISCHE PATENTSCHRIFT

(11) **EP 2 163 527 B1**
(45) Veröffentlichungstag und Bekanntmachung des Hinweises auf die Patenterteilung: **03.04.2013**
(21) Anmeldenummer: 08016112.8
(22) Anmeldetag: 12.09.2008
(51) Int. Cl.: C03B 7/086

(54) **Glasschmelzezufuhrvorrichtung**
Glass melt supply device
Dispositif d'alimentation de verre en fusion

(43) Veröffentlichungstag der Anmeldung: 17.03.2010
(73) Patentinhaber: Waltec Maschinen GmbH, 96352 Wilhelmsthal-Steinberg (DE)
(72) Erfinder: Rose, Dieter, 96328 Küps (DE); Bassing, Werner, 96364 Marktrodach (DE)
(74) Vertreter: Köhler, Walter

(56) Entgegenhaltungen:
- EP-A- 1 209 128
- EP-A- 1 526 118
- DE-A1- 3 527 307
- US-A- 4 579 395

## Beschreibung

Die Erfindung betrifft eine Glasschmelzezufuhrvorrichtung nach dem Oberbegriff des Anspruchs 1.

Die Glasschmelzezufuhrvorrichtung, im Weiteren Glas-Feeder genannt, ist eine Glasmaschine zum Bereitstellen von Glastropfen bzw. Glasposten. Unter Glasmaschinen werden hier Maschinen verstanden, die dafür vorgesehen sind, aus Glasschmelzen gebildete Glasprodukte, wie Flaschen, Trinkgläser und dergleichen herzustellen. Glasmaschinen sind also Maschinen, in denen Glasschmelze gehandhabt wird, indem Glasschmelze aus einem Glasschmelzebehälter dosiert abgezogen wird und/oder in eine Glasform eingeführt wird. Es handelt sich um Glasschmelze-Zuführ- und/oder - Formmaschinen.

Glasmaschinen, wie Glas-Feeder oder Drehtische, werden herkömmlich mit Elektromotoren angetrieben, die über ein Zwischengetriebe mit der Glasmaschine verbunden sind. Das Zwischengetriebe weist mechanische Verluste auf und erhöht damit den Energiebedarf zum Betrieb der Glasmaschine und ist infolge der rauen Umgebungsbedingungen einem erhöhten Verschleiß unterworfen. Ferner wirken die Zwischengetriebe begrenzend auf Dynamik und Durchsatz der Glasmaschine. Eine weitere Verschleißquelle sind Lagerungen und Führungen für bewegliche Bauteile.

Es sind Glasmaschinen mit direktem Antrieb bekannt, wie beispielsweise die in EP 1037859 B1 und EP 1 209 128 A2 beschriebenen Glas-Feeder mit elektrischem Linearmotor oder der in WO 00/39037 beschriebene Drehtisch mit Direktantrieb.

Aufgabe der vorliegenden Erfindung ist es, einen Glas-Feeder mit einem verbesserten Direktantrieb anzugeben.

Erfindungsgemäß wird diese Aufgabe mit dem Gegenstand des Anspruchs 1 gelöst. Es wird eine Glasschmelzezufuhrvorrichtung, vorzugsweise glas-feder genannt, vorgeschlagen, mit einem Glasschmelzebehälter mit einer Ausgangsöffnung und einem durch diese auf- und abbewegten Kolben, vorzugsweise Plunger genannt, wobei der Kolben mit einem elektrischen Antriebsmotor verbunden ist, und wobei der elektrische Antriebsmotor des Kolbens (22) als Direktantrieb ausgebildet ist, wobei vorgesehen ist, dass der Kolben (22) mit einem Führungskörper (42) mindestens einer Wälzführung (4a, 4b) starr verbunden ist, wobei die Längsachse des Kolbens (22) parallel zu der Führungsachse des Führungskörpers (42) ist. Es sind auch Ausführungen möglich, bei denen mehrere parallele Kolben gleichzeitig über den selben elektrischen Antriebsmotor angetrieben werden.

Die Wälzführung weist gegenüber einer Gleitführung geringere Reibungsverluste auf, hat einen geringeren Verschleiß und bessere Notlaufeigenschaften. Sie kann so gekapselt werden, dass über längere Zeit ein wartungsfreier Betrieb möglich ist.

Es ist vorgesehen, dass die Wälzführung eine Geradführung ist.

Weiter ist vorgesehen, dass der Kolben mit einem mindestens zwei Führungskörper aufnehmenden Führungsschlitten einer Führungseinheit verbunden ist, wobei die Führungskörper senkrecht zur Führungsbahn des Führungsschlittens voneinander beabstandet sind. Auf diese Weise wird die effektive Führungsbahnbreite vergrößert, so dass beispielsweise durch den Plunger erzeugte Kippmomente besser aufgefangen werden als es mit nur einer Führung gleicher Abmessung möglich ist.

Weiter kann vorgesehen sein, dass der Abstand der Führungskörper selbsteinstellbar ist. Damit können beispielsweise temperaturbedingte Abstandsänderungen ausgeglichen werden. Und es kann auch die erforderliche Fertigungsgenauigkeit reduziert werden.

Vorteilhafterweise kann vorgesehen sein, dass der Kolben über eine Verbindungsbrücke mit dem Führungsschlitten starr verbunden ist, wobei die Längsachse des Kolbens parallel zu der Führungsachse des Führungsschlittens ist. Der Kolben kann vorteilhafterweise in seiner Lage einstellbar auf der Verbindungsbrücke befestigt sein. Der Kolben kann beispielsweise schwenkbar befestigt sein, um die Kolbeachse parallel zu der Bewegungsbahn des Führungsschlittens auszurichten. Es kann dazu weiter eine Justiervorrichtung vorgesehen sein, die das feinfühlige Verschwenken des Kolbens auf der Verbindungsbrücke ermöglicht. Es kann aber auch vorgesehen sein, den Kolben starr an der Verbindungsbrücke zu befestigen und die Verbindungsbrücke an dem Führungsschlitten schwenkbar zu lagern und nach dem Einstellen der Parallelität der Kolbenachse und der Führungsbahn des Führungsschlittens die Verbindungsbrücke an dem Führungsschlitten zu arretieren.

Es kann weiter vorgesehen sein, dass der Führungskörper der Wälzführung direkt auf Wälzkörpern gelagert ist.

Als Wälzkörper können Kugeln, Rollen oder Nadeln vorgesehen sein. Es ist aber auch möglich, dass der Führungskörper der Wälzführung auf Wälzlagern gelagert ist.

In einer vorteilhaften Ausbildung kann vorgesehen sein, dass der Antriebsmotor zwischen den Wälzführungen angeordnet ist.

Es ist vorgesehen, dass die Bewegungsbahn des Läufers des Antriebsmotors eine Gerade ist, die parallel zu den Führungsbahnen der Geradführungen ist. Ein solcher Motor wird auch als Linearmotor bezeichnet. Der Motor kann vorteilhafterweise über ein Messsystem zur Bestimmung der Läuferposition verfügen oder an ein separates Messsystem gekoppelt sein, das mit einem anderen, mit der Motorbewegung gekoppelten Bauelement zusammenwirkt.

Der elektrische Antriebsmotor des Kolbens weist einen permanentmagnetischen Läufer auf, der von einem im Stator des Motors erzeugten magnetischen Wanderfeld mitgeführt wird.

Die Erfindung wird nun anhand von einem Ausführungsbeispiel näher erläutert. Es zeigen
- Fig. 1: ein Ausführungsbeispiel einer erfindungsgemäßen Glasschmelzezufuhrvorrichtung;
- Fig. 2: eine Einzelheit II aus Fig. 1 im Querschnitt;

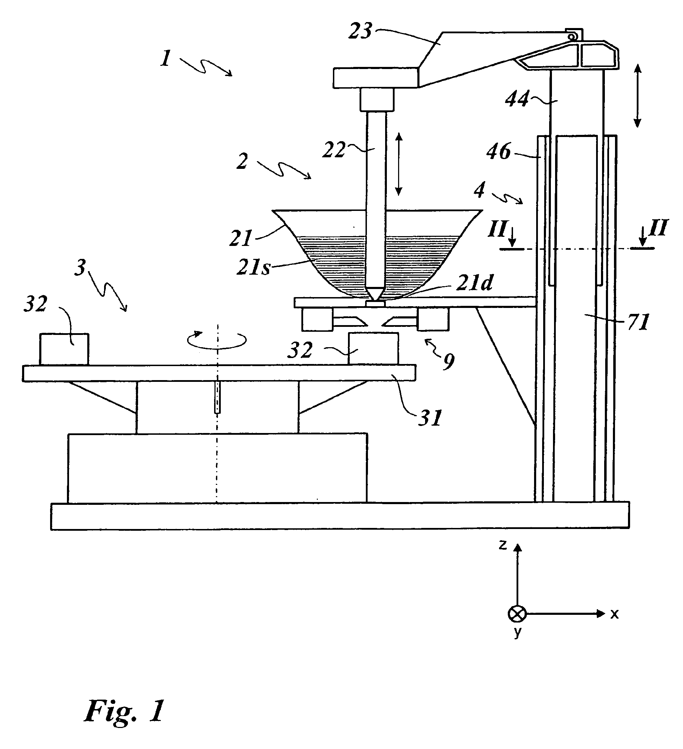

Fig. 1 zeigt eine Glasmaschine 1, die zur Herstellung von Formglas bestimmt ist. Die Glasmaschine 1 weist eine Glasschmelzezufuhrvorrichtung 2, im Weiteren als einen Glas-Feeder bezeichnet, zum Bereitstellen von Glastropfen, einen Drehtisch 3, sowie eine Glastropfenschere 9 auf.

Der Drehtisch 3 ist in dem in Fig. 1 dargestellten Ausführungsbeispiel dazu bestimmt, Glasformen 32 aufzunehmen, die auf einer Drehtischplatte 31 kreisförmig angeordnet sind und taktweise oder kontinuierlich bewegt werden. Die Drehtischplatte 31 kann beispielsweise direkt, d. h. ohne Zwischengetriebe, durch einen Scheibenläufermotor angetrieben sein.

Bei dem Glas-Feeder 2 handelt es sich um eine direkt angetriebene Maschine, die Glastropfen für die auf dem Drehtisch 3 angeordneten Glasformen 32 bereitstellt. Über einem Glasschmelzebehälter 21, der mit einer Glasschmelze 21s befüllt ist, ist ein senkrecht verfahrbarer Plunger 22 angeordnet, der in seiner unteren Stellung eine im Boden des Glasschmelzebehälters 21 als Durchgangsloch ausgebildete Ausgangsöffnung 21d verschließt und in seiner oberen Stellung freigibt. Durch die Ausgangsöffnung 21 d tritt im geöffneten Zustand Glasschmelze 21s aus, die einen Tropfen bildet, der von der Glastropfenschere 9 abgetrennt wird.

Der Plunger 22 ist mit einem waagerecht angeordneten Verbindungsbalken 23 verbunden, der drehstarr mit einem Führungsschlitten 44 einer senkrecht angeordneten Geradführungseinheit 4 verbunden ist. Die Bahn des Führungsschlittens 44 verläuft parallel zur linearen Bewegungsbahn des Plungers 22.

Die Geradführungseinheit 4 stützt sich über ein Führungsgestell 46 auf einem Maschinenfundament ab, auf dem auch der Drehtisch 3 angeordnet ist. Der Glasschmelzebehälter 21 ist in dem in Fig. 1 dargestellten Ausführungsbeispiel beispielhaft an dem Führungsgestell 46 angeordnet.

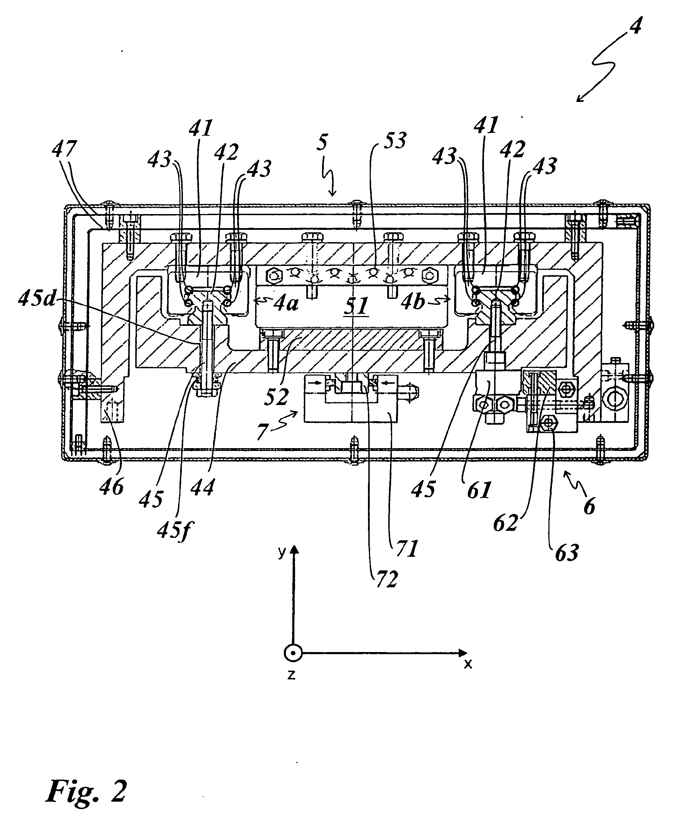

Der Führungsschlitten 44 ist mit einer Schwerkraftbremse 7 verbunden, wie in Fig. 2 näher erläutert.

Fig. 2 zeigt nun den Aufbau der Geradführungseinheit 4 im Einzelnen.

Der Führungsschlitten 44 der Geradführungseinheit 4 ist mit einem Läufer 52 eines Linearmotors 5 starr verbunden. Der Läufer 52 weist Permanentmagnete (in Fig. 2 nicht dargestellt) auf, die mit abwechselnder Polarität in einer Reihe nebeneinander angeordnet sind. Die Stirnseiten der Permanentmagnete sind unter Ausbildung eines Luftspaltes den Stirnseiten von Kernspulen (in Fig. 2 nicht dargestellt) eines Stators 51 entlanggeführt. Die Kernspulen des Stators 51 bilden ein magnetisches Wanderfeld aus, dem die Permanentmagnete folgen. An der den Stirnseiten der Kernspulen abgewandten Rückseite des Stators ist eine Motorkühlung 53 angeordnet, die in gutem thermischen Kontakt mit dem weichmagnetischen Kern des Stators steht. Bei der Motorkühlung 53 kann es sich vorzugsweise um eine übliche Motorkühlung handeln, bei der in rohrförmigen Kühlkörpern ein Kühlmittel zirkuliert, das durch einen Wärmetauscher strömt. Weiter weist die Geradführungseinheit 4 ein Kühlgehäuse 47 auf, das zumindest teilweise das Führungsgestell 46 umgibt und es gegen Wärmestrahlung abschirmt.

Der vertikal bewegte Führungsschlitten 44 ist mit Führungskörpern 42 zweier Wälzführungen 4a und 4b starr verbunden. Die Führungskörper 42 weisen Gewindesacklöcher auf, in die als Befestigungsschrauben ausgebildete Befestigungselemente 45 eingreifen. Zum Ausgleich temperaturbedingter Abstandsänderungen der Führungskörper 42 ist einer der Führungskörper 42 seitenbeweglich ausgebildet. In dem in Fig. 2 dargestellten Ausführungsbeispiel ist der Führungskörper 42 der Wälzführung 4a seitenbeweglich, weil die Befestigungsschraube 45 der Wälzführung 4a ein in den Führungsschlitten 44 eingebrachtes Durchgangsloch durchgreift, dessen Innendurchmesser größer als der Außendurchmesser des Schraubenschaftes der Befestigungsschraube 45 ist. Der maximale Verstellweg des verstellbaren Führungskörpers 42 ist gleich der Differenz zwischen dem Innendurchmesser des Durchgangslochs und dem Außendurchmesser des Schraubenschaftes der Befestigungsschraube 45. Das Festziehen der Befestigungsschraube 45 ist durch eine untergelegte Tellerfeder 45f verhindert.

Die Führungskörper 42 sind über Wälzkörper 43 in einer senkrecht angeordneten Führungsbahn 41 geführt, die mit dem Führungsgestell 46 starr verbunden ist. Sowohl das Führungsgestell 46 als auch der Führungsschlitten 44 sind im Wesentlichen als U-Profile ausgebildet, die so ineinander gefügt sind, dass sie einen Innenraum ausbilden, in dem die Wälzführungen 4a und 4b sowie der Linearmotor 5 geschützt angeordnet sind. Die Wälzkörper 43 sind in dem in Fig. 2 dargestellten Ausführungsbeispiel Kugeln. Es können aber auch Rollen oder Nadeln vorgesehen sein.

Eine Messeinrichtung 6 ist wesentlich für den Betrieb des Linearmotors 5. Ein Maßstab 61 ist starr mit dem Führungsschlitten 44 verbunden und wird von dem Messkopf 62 abgetastet. Wegen der hohen Umgebungstemperatur an dem Glasschmelzebehälter 21 ist eine Messkopfkühlung 63 vorgesehen.

### Bezugszeichenliste

- 1: Glasmaschine
- 2: Glas-Feeder
- 3: Drehtisch
- 4: Führungseinheit
- 4a: linke Wälzführung
- 4b: rechte Wälzführung
- 5: Linearmotor
- 6: Messeinrichtung
- 7: Schwerkraftbremse
- 9: Glastropfenschere
- 21: Glasschmelzebehälter
- 21s: Glasschmelze
- 21d: Ausgangsöffnung
- 22: Plunger
- 23: Verbindungsbalken
- 31: Drehtischplatte
- 32: Glasform
- 41: Führungsbahn
- 42: Führungskörper
- 43: Wälzkörper
- 44: Führungsschlitten
- 45: Befestigungselement
- 45d: Durchgangsloch
- 45f: Tellerfeder
- 46: Führungsgestell
- 47: Kühlgehäuse
- 51: Stator
- 52: Läufer
- 53: Motorkühlung
- 61: Maßstab
- 62: Messkopf
- 63: Messkopfkühlung
- 71: Bremsgestell
- 72: Gleitstück

## Patentansprüche

1. Glasschmelzezufuhrvorrichtung, vorzugsweise Glas-Feeder genannt, mit einem Glasschmelzebehälter (21) mit einer Ausgangsöffnung (21d) und einem durch diese auf- und abbewegten Kolben (22), vorzugsweise Plunger genannt, wobei der Kolben (22) mit einem elektrischen Antriebsmotor (5) verbunden ist, und wobei der elektrische Antriebsmotor (5) des Kolbens (22) als Direktantrieb ausgebildet ist,
**dadurch gekennzeichnet,**
a) **dass** der Kolben (22) mit einem zwei Führungskörper (42) von Wälzführungen (4a, 4b) aufnehmenden Führungsschlitten (44) einer Geradführungseinheit (4) starr verbunden ist, wobei die Führungskörper (42) senkrecht zur Bewegungsrichtung des Führungsschlittens (44) voneinander beabstandet sind, und wobei die Längsachse des Kolbens (22) parallel zu den Führungsachsen der Führungskörper (42) ist, und
b) **dass** der elektrische Antriebsmotor (5) des Kolbens (22) als Linearmotor ausgebildet ist, der einen permanentmagnetischen Läufer (52) aufweist, wobei Permanentmagnete mit abwechselnder Polarität in einer Reihe nebeneinander angeordnet sind und die Stirnseiten der Permanentmagnete unter Ausbildung eines Luftspaltes an den Stirnseiten von Kernspulen eines Stators (51) entlanggeführt sind, wobei die Bewegungsbahn des Läufers (52) eine Gerade ist, die parallel zu den Führungsbahnen der Wälzführungen (4a, 4b) ist.

2. Glasschmelzezufuhrvorrichtung nach Anspruch 1,
**dadurch gekennzeichnet,**
**dass** der Abstand der Führungskörper (42) selbsteinstellbar ist.

3. Glasschmelzezufuhrvorrichtung nach Anspruch 2,
**dadurch gekennzeichnet,**
**dass** der Kolben (22) über eine Verbindungsbrücke (23) mit dem Führungsschlitten (44) starr verbunden ist, wobei die Längsachse des Kolbens (22) parallel zu der Führungsachse des Führungsschlittens (44) ist.

4. Glasschmelzezufuhrvorrichtung nach einem der vorangehenden Ansprüche,
**dadurch gekennzeichnet,**
**dass** der Führungskörper (42) der Wälzführung (4a, 4b) direkt auf Wälzkörpern (43) gelagert ist.

5. Glasschmelzezufuhrvorrichtung nach Anspruch 4,
**dadurch gekennzeichnet,**
**dass** als Wälzkörper (43) Kugeln vorgesehen sind.

6. Glasschmelzezufuhrvorrichtung nach Anspruch 5,
**dadurch gekennzeichnet,**
**dass** als Wälzkörper (43) Rollen oder Nadeln vorgesehen sind.

7. Glasschmelzezufuhrvorrichtung nach einem der Ansprüche 1 bis 3,
**dadurch gekennzeichnet,**
**dass** der Führungskörper (42) der Wälzführung (4a, 4b) auf Wälzlagern gelagert ist.

8. Glasschmelzezufuhrvorrichtung nach einem der vorangehenden Ansprüche,
**dadurch gekennzeichnet,**
**dass** der Antriebsmotor (5) zwischen den Wälzführungen (4a, 4b) angeordnet ist.

## Claims

1. Glass melt supply device, preferably known as a glass feeder, having a molten glass holder (21) with an outlet opening (21d) and a piston (22), preferably known as a plunger, that is moved in and out of this, wherein the plunger (22) is connected to an electrical drive motor (5) and wherein the electrical drive motor (5) of the plunger (22) is designed as direct drive,
**characterised in that**,
a) the plunger (22) is connected inflexibly to a guide block (44) of a linear guiding unit (4), said guide block (44) containing two guiding bodies (42) of roller guides (4a, 4b), wherein the guiding bodies (42) are separated from each other perpendicularly to the movement direction of the guide block (44) and wherein the longitudinal axis of the plunger (22) runs parallel to the guiding axes of the guiding bodies (42), and
b) the electrical drive motor (5) of the plunger (22) is designed as a linear motor having a permanent magnet rotor (52), wherein permanent magnets are arranged with alternating polarity in a row alongside one another and the front faces of the permanent magnets are guided alongside one another when an air gap is formed at the front faces of core-containing coils of a stator (51), wherein the trajectory of the rotor (52) is a straight line that runs parallel to the guide ways of the roller guides (4a, 4b).

2. Glass melt supply device according to claim 1,
**characterised in that**,
the gap in the guiding bodies (42) is self-adjustable.

3. Glass melt supply device according to claim 2,
**characterised in that**,
the plunger (22) is connected inflexibly to the guide block (44) via a connecting bridge (23), wherein the longitudinal axis of the plunger (22) runs parallel to the guiding axis of the guide block (44).

4. Glass melt supply device according to one of the preceding claims,
**characterised in that**,
the guiding body (42) of the roller guide (4a, 4b) is mounted directly on roller bodies (43).

5. Glass melt supply device according to claim 4,
**characterised in that**,
spheres are provided as roller bodies (43).

6. Glass melt supply device according to claim 5,
**characterised in that**,
rollers or pins are provided as roller bodies (43).

7. Glass melt supply device according to one of claims 1 to 3,
**characterised in that**,
the guiding body (42) of the roller guide (4a, 4b) is mounted on roller bearings.

8. Glass melt supply device according to one of the preceding claims,
**characterised in that**,
the drive motor (5) is arranged between the roller guides (4a, 4b).

## Revendications

1. Dispositif d'alimentation de verre en fusion, appelé de préférence chargeur de verre, présentant un récipient de verre en fusion (21) avec une ouverture de sortie (21d) et un piston (22) montant et descendant au travers de celle-ci, appelé de préférence plongeur, le piston (22) étant relié à un moteur d'entraînement électrique (5), et le moteur d'entraînement électrique (5) du piston (22) étant réalisé comme un entraînement direct,
**caractérisé en ce que**
a) le piston (22) est rigidement relié à un chariot de guidage (44) recevant deux corps de guidage (42) de guidages de roulement (4a, 4b) d'une unité de guidage droit (4), les corps de guidage (42) étant espacés les uns des autres perpendiculairement au sens de déplacement du chariot de guidage (44) et l'axe longitudinal du piston (22) étant parallèle aux axes de guidage des corps de guidage (42), et
b) le moteur d'entraînement électrique (5) du piston (22) étant réalisé comme un moteur linéaire qui présente un rotor (52) à aimants permanents, des aimants permanents avec une polarité changeante étant disposés dans un ordre les uns à côté des autres et les côtés frontaux des aimants permanents étant guidés le long des côtés frontaux de bobines à noyaux d'un stator (51) en réalisant un entrefer, la bande de déplacement du rotor (52) étant une droite parallèle aux bandes de guidage des guidages de roulement (4a, 4b).

2. Dispositif d'alimentation de verre en fusion selon la revendication 1,
**caractérisé en ce que**
la distance des corps de guidage (42) est autoréglable.

3. Dispositif d'alimentation de verre en fusion selon la revendication 2,
**caractérisé en ce que**
le piston (22) est rigidement relié par un pont de liaison (23) au chariot de guidage (44), l'axe longitudinal du piston (22) étant parallèle à l'axe de guidage du chariot de guidage (44).

4. Dispositif d'alimentation de verre en fusion selon l'une quelconque des revendications précédentes,
**caractérisé en ce que**
le corps de guidage (42) du guidage de roulement (4a, 4b) est directement logé sur des corps de roulement (43).

5. Dispositif d'alimentation de verre en fusion selon la revendication 4,
**caractérisé en ce que**
des billes sont prévues comme corps de roulement (43).

6. Dispositif d'alimentation de verre en fusion selon la revendication 5,
**caractérisé en ce que**
des rouleaux ou des aiguilles sont prévus comme corps de roulement (43).

7. Dispositif d'alimentation de verre en fusion selon l'une quelconque des revendications 1 à 3,
**caractérisé en ce que**
le corps de guidage (42) du guidage de roulement (4a, 4b) est logé sur des paliers à roulement.

8. Dispositif d'alimentation de verre en fusion selon l'une quelconque des revendications précédentes,
**caractérisé en ce que**
le moteur d'entraînement (5) est disposé entre les guidages de roulement (4a, 4b).
